# FASCICULE DE BREVET EUROPEEN

(11) **EP 4 638 250 B1**
(45) Date de publication et mention de la délivrance du brevet: **22.07.2026**
(21) Numéro de dépôt: 23805585.9
(22) Date de dépôt: 13.11.2023
(51) Int. Cl.: B62H 5/10, B60R 9/10

(54) **DISPOSITIF ANTIVOL, NOTAMMENT POUR VÉHICULE À PÉDALIER**
DIEBSTAHLSICHERUNG, INSBESONDERE FÜR EIN PEDALFAHRZEUG
ANTI-THEFT DEVICE, IN PARTICULAR FOR A PEDALLED VEHICLE

(30) Priorité: 21.12.2022 FR 2214029
(43) Date de publication de la demande: 29.10.2025
(73) Titulaire: Bikeslot, 38000 Grenoble (FR)
(72) Inventeur: HARRIS, Alistair, 38210 MONTAUD (FR); FROT, Pierre-Emmanuel, 38190 FROGES (FR); STIEN, Cédric, 38450 SAINT-GEORGES-DE-COMMIERS (FR)
(74) Mandataire: IP Trust
(86) Numéro de dépôt international: PCT/EP2023/081614
(87) Numéro de publication internationale: WO 2024/132298

(56) Documents cités:
- EP-A1- 3 549 849
- KR-A- 20110 064 607
- US-B1- 9 555 744

## Description

### DOMAINE DE L'INVENTION

La présente invention concerne un dispositif antivol, et notamment un dispositif antivol pour véhicule à pédalier tel qu'une bicyclette. L'invention concerne également une serrure électromécanique qui peut faire partie du dispositif antivol. La serrure électromécanique du dispositif antivol peut être alimentée par un récupérateur d'énergie mécanique. Elle peut être opérée par une unité de commande configurée pour s'appairer à un dispositif de traitement portable d'un utilisateur, par exemple un téléphone multifonctions dont l'utilisateur est équipé. L'invention concerne donc également le procédé de commande d'une serrure électromécanique.

### ARRIERE PLAN TECHNOLOGIQUE DE L'INVENTION

On connaît du document EP3549849 un dispositif antivol pour véhicule à pédalier, par exemple une bicyclette. Ce dispositif comprend une première partie d'antivol destinée à être solidarisée au sol et présentant une rainure ou gouttière de logement d'une manivelle du pédalier. Il comprend également une seconde partie d'antivol formant un verrou amovible, destinée à venir coiffer ladite première partie d'antivol de sorte à verrouiller en étaux la manivelle de pédalier dans la première partie d'antivol. La seconde partie d'antivol est agencée pour coiffer l'extrémité de la manivelle et l'axe de la pédale lorsque le corps de manivelle est engagé dans la rainure. On sécurise de la sorte la bicyclette qui ne peut être emmenée sans avoir préalablement déverrouillé les deux parties d'antivol. On rend également inaccessibles les éléments d'assemblage du pédalier, notamment au niveau de l'axe de pédale, ce qui ne permet donc pas de libérer par démontage le pédalier de l'étau formé par les deux parties d'antivol.

Bien que les principes de verrouillage exposés par ce document soient particulièrement intéressants, la solution proposée n'est pas suffisamment complète pour former un dispositif antivol accessible à un large public et apte à opérer dans un environnement urbain, par exemple dans une station de stationnement.

En premier lieu, le dispositif antivol proposé par ce document ne s'adapte pas à la taille de la bicyclette qu'il doit sécuriser. Pour compenser cela, il est nécessaire de prévoir, dans une station de stationnement, toute une variété de dispositifs antivol, chacun adapté à une dimension particulière de bicyclette (d'une dimension S à une dimension XL, par exemple).

Le dispositif antivol n'étant pas toujours parfaitement adapté à la taille de la bicyclette, les degrés de liberté de la bicyclette ne sont pas tous bloqués et des jeux importants peuvent apparaître. Par exemple, les roues de la bicyclette ne reposent pas forcément sur le sol, ou alors elles ne sont pas suffisamment plaquées sur le sol. Il est alors possible d'exploiter les jeux qui apparaissent entre la bicyclette et le dispositif antivol pour appliquer des efforts tendant à extraire « en force » la manivelle des deux parties de l'antivol.

Par ailleurs, il est souhaitable que le dispositif antivol dispose d'une interface permettant à un utilisateur de simplement opérer l'antivol, notamment lorsque le dispositif antivol est exploité dans une station de stationnement en environnement urbain. Cette interface peut par exemple permettre l'autorisation et/ou le paiement pour compenser l'utilisation du dispositif. A titre d'illustration, le document FR3114431A1 propose un cadenas pour retenir une bicyclette à un élément de mobilier urbain. Le cadenas peut entrer en communication avec un dispositif de traitement portable d'un utilisateur, c'est-à-dire un téléphone multifonction, et avec un serveur distant. Le téléphone multifonctions, le cadenas et le serveur se coordonnent pour autoriser le verrouillage et le déverrouillage du cadenas. Une telle interface nécessite d'alimenter en énergie électrique le cadenas et de le munir de moyens de communication relativement complexes. Or il est généralement souhaitable que le dispositif antivol soit le plus simple, en installation et en utilisation, et robuste possible.

On note que la problématique d'interfaçage, de simplicité d'installation et d'utilisation, de robustesse n'est pas limitée aux dispositifs antivols pour bicyclette, mais peut s'appliquer à tout dispositif antivol mettant en œuvre un verrou visant à sécuriser des objets, ou l'accès à un espace, dans des domaines d'applications variés, par exemple un antivol visant à sécuriser une clé d'accès à un logement (« boite à clé ») ou plus généralement une armoire de consigne ou encore pour verrouiller un portillon d'accès à un espace clos. Document US 9 555 744 B1 montre le préambule de la revendication 1.

### OBJET DE L'INVENTION

Un but de l'invention est de proposer un dispositif antivol, et notamment un dispositif antivol pour véhicule à pédalier tel qu'une bicyclette, qui adresse au moins en partie les limitations des solutions de l'état de la technique. Avantageusement ce dispositif antivol adresse également les besoins qui doivent être satisfaits pour un usage urbain, par exemple dans une station de stationnement de véhicule, et accessible à un large public. Un autre but de l'invention est de fournir un dispositif antivol mettant en œuvre un verrou visant à sécuriser des objets, ou l'accès à un espace, qui soit simple d'utilisation.

### BRÈVE DESCRIPTION DE L'INVENTION

En vue de la réalisation de ce but, l'objet de l'invention propose un dispositif antivol pour véhicule à pédalier, le dispositif comprenant :
a. une première partie d'antivol, solidaire d'un support, et présentant un logement destiné à recevoir une manivelle de pédalier ;
b. une seconde partie d'antivol, portée par le support, destinée à se rabattre sur la première partie d'antivol pour la coiffer et bloquer la manivelle de pédalier ;
c. Un mécanisme de verrouillage, également porté par le support, visant à verrouiller la seconde partie d'antivol sur la première partie d'antivol.

Selon l'invention, le dispositif antivol comprend un mécanisme de réglage pour ajuster une élévation de la première partie d'antivol par rapport au sol. Le mécanisme de verrouillage est configuré pour bloquer le mécanisme de réglage lorsque la seconde partie d'antivol est verrouillée sur la première partie d'antivol et ainsi figer son élévation.

Selon d'autres caractéristiques avantageuses et non limitatives de l'invention, prises seules ou selon toute combinaison techniquement réalisable :
- le support porte un axe d'antivol, la seconde partie d'antivol étant reliée à l'axe d'antivol de manière à être rabattue par pivotement sur la première partie d'antivol ;
- le mécanisme de réglage comprend une crémaillère et le mécanisme de verrouillage comprend un cliquet configuré pour s'engager dans la crémaillère;
- le support est un poteau tubulaire s'étendant selon une direction longitudinale sensiblement verticale ;
- le de réglage comprend un pied tubulaire destiné à reposer sur le sol, le pied tubulaire étant configuré pour s'engager dans le poteau tubulaire et permettre à celui-ci de coulisser ;
- le mécanisme de réglage comprend un piston comprenant une tête de piston, le piston étant disposé dans le pied tubulaire et la tête de piston soutenant le poteau tubulaire ;
- le piston comprend un corps de piston, un ressort de compression disposé dans le corps de piston et une tige pour retenir le ressort de compression dans le corps de piston ;
- le mécanisme de verrouillage comprend un galet solidaire de l'axe d'antivol et en contact avec le piston ;
- le galet du mécanisme de verrouillage prend la forme d'une came ;
- le mécanisme de verrouillage comprend une serrure, la serrure comportant un pêne de serrure destiné à s'engager dans un orifice de blocage du galet ;
- la serrure est alimentée électriquement pour sélectivement engager et dégager le pêne de serrure de l'orifice de blocage du galet ;
- le dispositif antivol comprend une source d'énergie renouvelable associée à la serrure ;
- la source d'énergie renouvelable est un récupérateur d'énergie mécanique ;
- le récupérateur d'énergie mécanique comprend :
   - une coiffe disposée sur le sommet du support, la coiffe étant apte à se déplacer en translation longitudinale à partir d'une position d'origine sur le support par application d'un effort extérieur ;
   - un mécanisme de rappel pour replacer, au cours d'un déplacement retour, la coiffe dans sa position d'origine lorsque l'application de l'effort extérieur est interrompue ;
   - un mécanisme d'entraînement relié à la coiffe et à un générateur, pour transformer en énergie électrique le déplacement de la coiffe ;
- le mécanisme d'entraînement est à roue libre, de sorte que le générateur n'est entraîné qu'au cours du déplacement retour de la coiffe ;
- le mécanisme de verrouillage comprend une unité de commande pour opérer la serrure comprenant un circuit de communication à champ proche.

### DESCRIPTION DES FIGURES

D'autres caractéristiques et avantages de l'invention ressortiront de la description détaillée de l'invention qui va suivre en référence aux figures annexées sur lesquels :
[Fig.1a]
[Fig.1b]
[Fig.1c]
[Fig.1d]

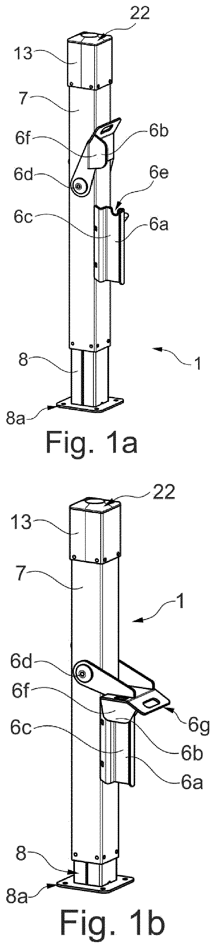

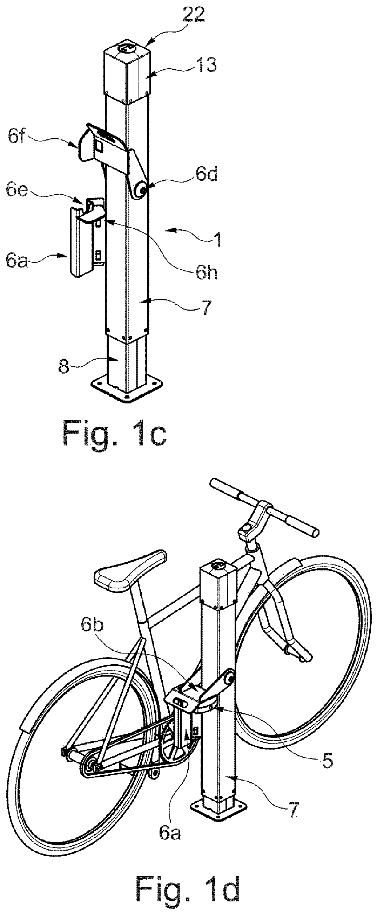

Les figures 1a, 1b, 1c, 1d représentent une vue d'ensemble d'un dispositif antivol pour véhicule à pédalier dans une position libre et dans une position occupée, selon un mode de mise en œuvre ;
[Fig.2a]
[Fig.2b]

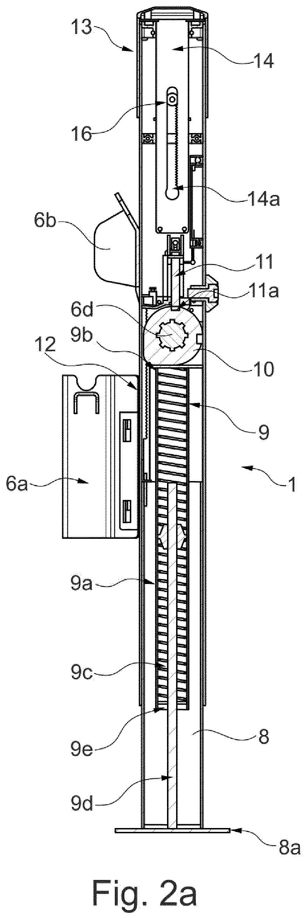

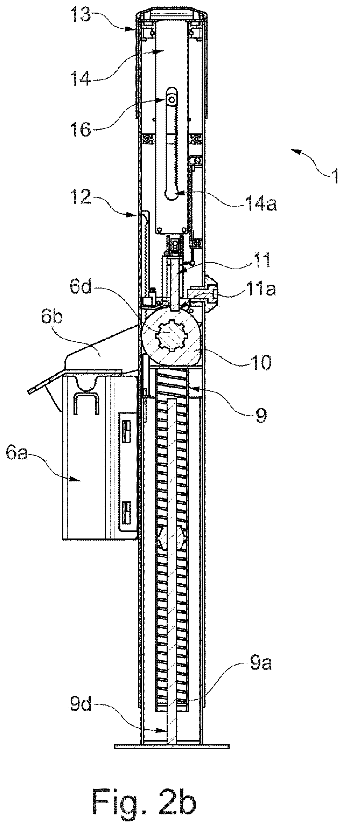

Les figures 2a, 2b représentent des coupes des dispositifs antivol des figures 1a et 1b ;
[Fig.2c]

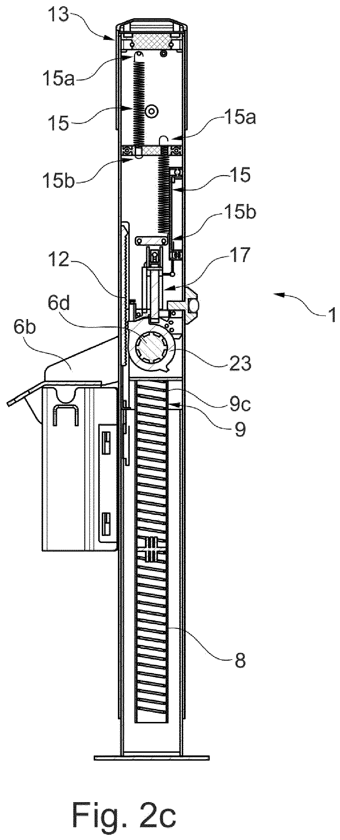

La [Fig.2c] représente une autre coupe du dispositif antivol de la [Fig.1b] ;
[Fig.3a]
[Fig.3b]

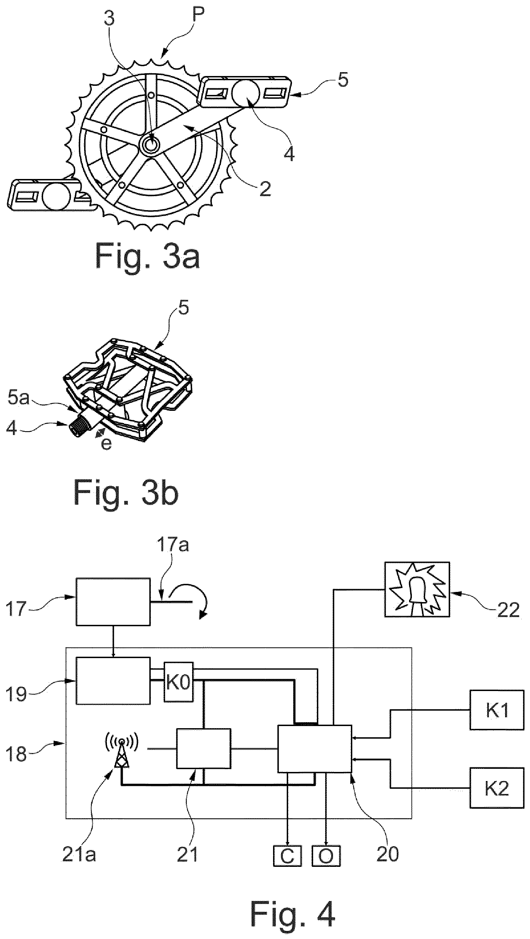

Les figures 3a et 3b représentent respectivement un pédalier et une pédale ;
[Fig.4]
La [Fig.4] représente une unité de commande d'un dispositif antivol d'un mode de mise en œuvre;
[Fig.5a]
[Fig.5b]
[Fig.5c]

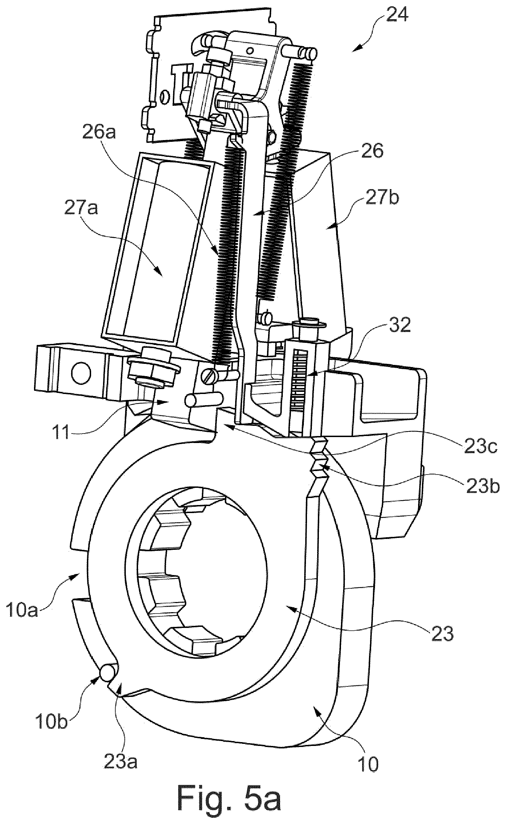

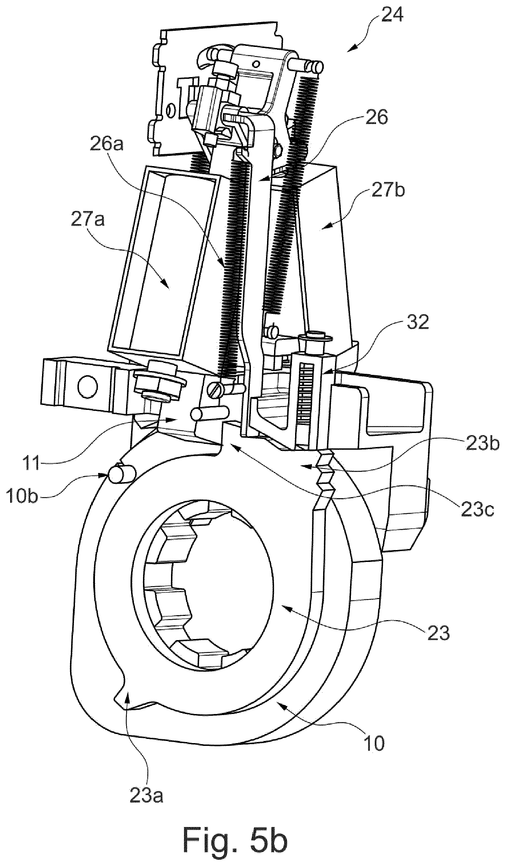

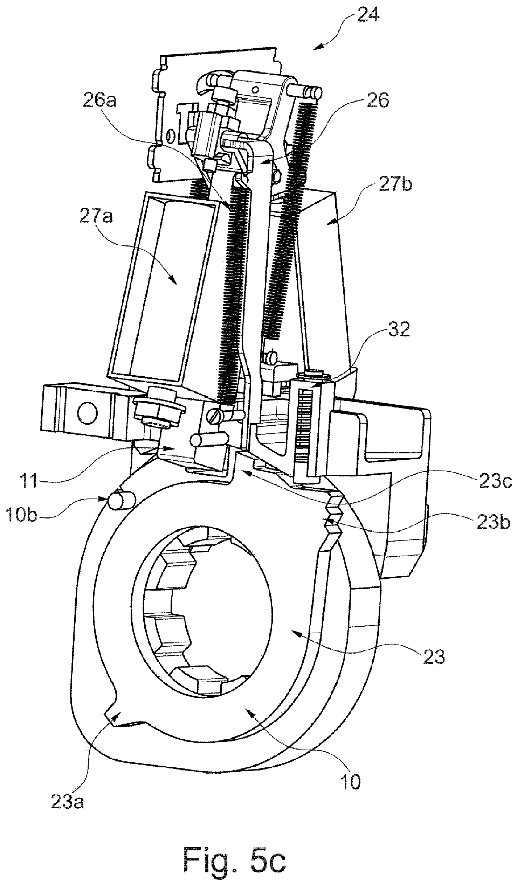

Les figures 5a, 5b, 5c représentent respectivement une serrure d'un mécanisme de verrouillage d'un dispositif antivol respectivement en position libre, refermée et verrouillée ;
[Fig.6a]
[Fig.6b]

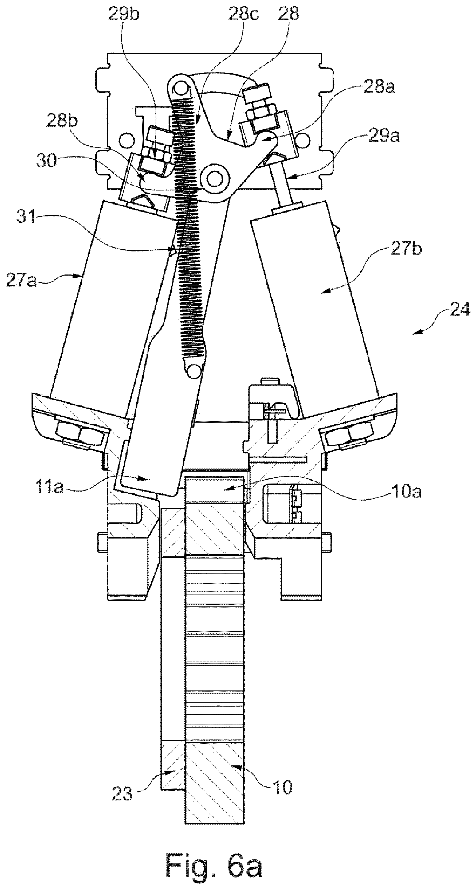

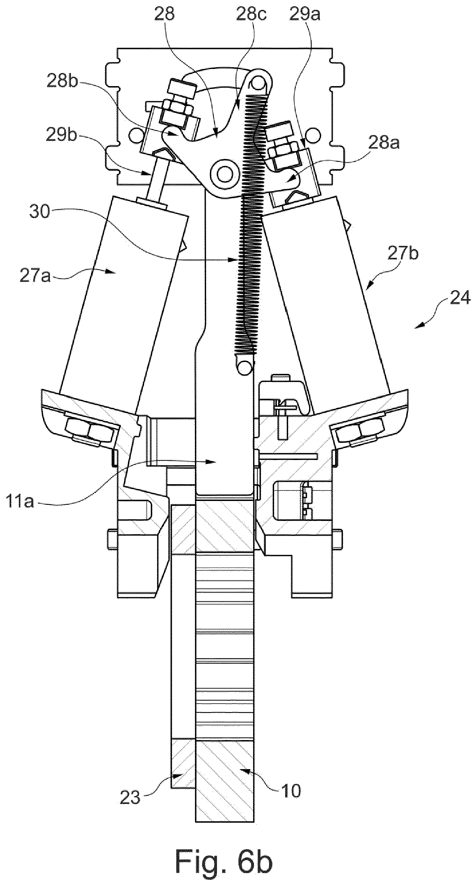

Les figures 6a et 6b représentent une vue en coupe d'une serrure en position déverrouillée et en position verrouillée.

### DESCRIPTION DETAILLEE DE L'INVENTION

Par souci de simplification de la description à venir, les mêmes références sont utilisées pour des éléments identiques ou assurant la même fonction dans les différents modes de mise en œuvre de l'invention.

Par « véhicule à pédalier » on désigne tout véhicule pouvant être mis en mouvement par son utilisateur par l'intermédiaire d'un pédalier. Il peut typiquement s'agir d'une bicyclette, avec ou sans assistance électrique, mais le dispositif antivol de la présente description n'est nullement limité à ce type de véhicule à pédalier.

On rappelle, en référence aux figures 3a et 3b qui représentent respectivement un pédalier P et une pédale 5, qu'un pédalier P comprend deux manivelles 2 présentant chacune une première extrémité reliée à un axe de pédalier 3 et une seconde extrémité reliée à un axe 4 d'une pédale 5. Les manivelles 2 sont calées à l'opposée l'une de l'autre sur l'axe de pédalier 3.

### Description générale du dispositif antivol

Les figures 1a, 1b, 1c et 1d représentent une vue d'ensemble d'un mode de réalisation d'un dispositif antivol 1 pour véhicule à pédalier, respectivement dans une position libre (figures 1a,1c) et dans une position occupée ou refermée (figures 1b,1d). La position libre est celle du dispositif 1 lorsqu'il est disponible pour recevoir un véhicule. La position refermée est celle du dispositif 1 lorsqu'il sécurise un véhicule en vue d'en empêcher le vol. On a omis de représenter le véhicule à pédalier sur la [Fig.1b], pour plus de lisibilité.

Le dispositif antivol 1 qui fait l'objet de la présente description reprend les principes de la solution présentée dans le document EP3549849 cité en introduction de cette demande. On retrouve donc bien sur les figures 1a, 1b, 1c, 1d une première partie d'antivol 6a présentant un logement 6c destiné à recevoir une manivelle de pédalier du véhicule lorsque celui-ci est disposé convenablement sur le dispositif antivol 1 pour être sécurisé. On retrouve également une seconde partie d'antivol 6b destinée à se rabattre sur la première partie d'antivol 6a pour la coiffer et ainsi bloquer la manivelle de pédalier, et plus généralement une partie du pédalier « en étaux » entre les deux parties d'antivol 6a,6b.

Plus spécifiquement, et dans le mode de réalisation préféré représenté sur les figures 1a, 1b, 1c, 1d le logement de la première partie d'antivol 6a est formé d'une gouttière 6c agencée sur une surface frontale de la première partie d'antivol 6a. La gouttière est surmontée d'une gorge 6e pour accueillir un axe de pédale associée à la manivelle de pédalier lorsque celle-ci est disposée dans la gouttière 6c. La gorge 6e vient donc se positionner dans l'espace e séparant la manivelle de la pédale, cette espace e étant représenté sur la [Fig.3b]. La gouttière présente une longueur suffisante pour s'étendre de l'axe de pédale 4 jusque l'axe de pédalier 3 et ainsi masquer l'écrou retenant l'axe de pédalier à la manivelle, comme cela est visible sur la [Fig.1d]. On empêche ainsi le démontage de cet écrou, ce démontage pouvant permettre de libérer le véhicule de l'étau formé des deux parties d'antivol 6a,6b.

La première partie d'antivol 6a comprend également une surface d'appui 6h, s'étendant depuis la gorge 6e perpendiculairement à la surface frontale sur laquelle est formée la gouttière 6c. La surface d'appui permet de recevoir la pédale associée à la manivelle de pédalier lorsque celle-ci est disposée dans la gouttière. Elle empêche également l'accès, par le dessous, à l'écrou de pédale 5a, prévenant ainsi son démontage.

La seconde partie d'antivol 6b est quant à elle formée d'une plaque de recouvrement de la pédale reposant sur la surface d'appui. Cette plaque, lorsque la seconde partie d'antivol 6b est rabattue sur la première 6a, empêche l'accès par le dessus à l'écrou de pédale 5a. Avantageusement, la plaque de recouvrement comporte une branche 6f pour masquer l'axe de la pédale.

La première et la seconde partie d'antivol 6a,6b sont toutes deux portées par un support 7, qui prend la forme dans le mode de réalisation représenté d'un poteau tubulaire s'étendant selon une direction longitudinale sensiblement verticale. La première partie d'antivol 6a est solidaire du support 7. Dans certains cas, on peut prévoir que la première partie d'antivol 6a soit rendue solidaire du support, tout en restant démontable, afin de faciliter la maintenance du dispositif 1. La seconde partie d'antivol 6b est montée sur un axe d'antivol 6d sensiblement horizontal, également porté par le support 7. La seconde partie d'antivol 6b peut être rabattue par pivotement sur la première partie d'antivol 6a et ainsi la coiffer. A cet effet, la seconde partie d'antivol 6b peut présenter une poignée 6g permettant la prise en main par l'utilisateur de cette seconde partie pour la refermer sur la première partie. Bien entendu, le support 7 peut prendre une autre forme que celle du poteau tubulaire mis en œuvre dans le mode de réalisation représenté.

Le dispositif antivol 1 est muni d'un mécanisme de verrouillage, visant à verrouiller la seconde partie d'antivol 6b sur la première partie d'antivol 6a, afin de sécuriser le véhicule et d'en empêcher le vol. Le mécanisme de verrouillage, également porté par le support 7, s'engage pour rendre solidaires entre eux la première partie et la seconde partie d'antivol lorsque cette seconde partie d'antivol 6b est rabattue par l'utilisateur sur la première partie 6a, en la faisant pivoter autour de l'axe 6d comme cela sera détaillé dans une section suivante de cette description. Par « solidaires entre eux », on signifie qu'il n'est pas possible d'écarter la seconde partie d'antivol 6a de la première partie 6a, en appliquant des efforts tentant de libérer le pédalier.

Pour ce faire, le mécanisme de verrouillage comprend un galet 10 traversé centralement par l'axe d'antivol 6d et solidaire de celui-ci, si bien que le pivotement de la seconde partie d'antivol 6b entraîne en rotation le galet 10. Avantageusement, pour des raisons qui seront rendues apparentes dans la suite de cette description, le galet 10 prend la forme d'une came.

Le mécanisme de verrouillage comprend également une serrure 24 composée d'un pêne de serrure 11 destiné à sélectivement s'engager et se désengager dans un orifice de blocage du galet 10 formant une gâche de la serrure, pour sélectivement bloquer et débloquer le mouvement de rotation de l'axe d'antivol 6d. Lorsque le pêne de serrure est engagé dans la gâche, le dispositif antivol est verrouillé. Le pêne de serrure 11 peut être déplacé entre sa position engagée et sa position dégagée de la gâche par tout mécanisme qui convient, par exemple et de manière très conventionnelle par l'intermédiaire d'une clé actionnée par l'utilisateur ou par l'intermédiaire d'un moteur ou d'un servo-moteur. Dans le mode de mise en œuvre représenté, le pêne de serrure 11 est déplacé par un électro-mécanisme de la serrure, qui fera l'objet d'une section ultérieure de cette description.

Le dispositif antivol 1 comprend également un mécanisme de réglage pour ajuster une élévation de la première partie d'antivol 6a par rapport au sol. L'élévation ajustable de l'antivol 6a, 6b permet non seulement d'ajuster le dispositif antivol 1 à des véhicules de différentes tailles, il présente également l'avantage de pouvoir, en position refermée du dispositif 1, plaquer ce véhicule contre le sol afin de bloquer tout mouvement ou jeu en roulis, en tangage et en lacet du véhicule. Cette caractéristique en complément de l'effet « étau » des deux parties d'antivol 6a,6b qui limitent les déplacements ou les jeux en cavalement, en embardé et en pilonnement, contribue à sécuriser le véhicule en limitant les couples qui peuvent être appliqués, en forçant sur le véhicule, sur les deux parties d'antivols 6a,6b, ces couples visant à les désolidariser et libérer le véhicule de leur emprise.

Le mécanisme de réglage comprend un pied 8 destiné à ancrer le dispositif antivol 1 très fermement au sol, de sorte qu'un véhicule retenu par sa manivelle en étau entre les deux parties d'antivol 6a,6b, ne puisse être soustrait facilement du dispositif 1. Dans le mode de mis en œuvre présenté, le pied 8 repose et est fixé fermement sur le sol par l'intermédiaire d'une embase qui permet par exemple de boulonner le pied 8 sur un bloc de béton enterré. Mais dans des variantes de mise en œuvre, ce pied 8 pourrait, alternativement ou en complément, être rendu solidaire d'un mobilier urbain, d'une arche ou de tout autre élément fermement ancré au sol. Dans le mode de mise en œuvre représenté, le pied 8 est tubulaire et il est configuré pour s'engager dans le poteau tubulaire 7 pour permettre à celui-ci de coulisser et ajuster une élévation de la première partie d'antivol 6a, solidaire du poteau tubulaire 7, par rapport au sol. Pour permettre ce coulissement, le pied 8 s'étend selon une direction longitudinale sensiblement verticale.

Le mécanisme de réglage comprend également un piston 9 soutenant le support 7. Le piston 9 peut être formé d'un simple ressort hélicoïdal de compression. Le piston permet de placer le support 7 et la première partie d'antivol 6a, en position ouverte du dispositif antivol 1 et en l'absence de tout véhicule, à une élévation du sol dite « d'accueil » adaptée à recevoir le véhicule. Un effort présentant une composante verticale dirigée vers le sol et appliqué au support 7 tend à comprimer le ressort pour ajuster l'élévation de ce support 7 (et de la première partie d'antivol 6a) pour le rapprocher du sol. Le piston 9 permet donc d'ajuster simplement l'élévation de la première partie d'antivol 6a à la taille du véhicule, comme on l'a déjà énoncé, pour que ce véhicule puisse reposer sur le sol une fois disposé dans et sur le dispositif antivol 1. Cet ajustement de l'élévation du support conduisant à faire reposer le véhicule sur le sol peut nécessiter d'appliquer un effort complémentaire à l'effort engendré par le seul poids du véhicule.

Dans le mode de réalisation représenté, et comme cela est visible sur les figures 2a et 2b, le piston 9 est disposé dans le pied tubulaire 8, une tête 9b de ce piston 9 soutenant le poteau tubulaire 7. Plus spécifiquement, la tête 9b du piston est en contact avec le galet 10 du mécanisme de verrouillage. Le piston comprend un corps de piston 9a, un ressort de compression 9c disposé dans le corps de piston 9a entre la tête de piston 9b et une seconde butée 9e disposée sur une tige 9d coulissante dans le corps de piston 9a. La tige 9d repose sur l'embase 8a. Elle est insérée partiellement dans le corps de piston 9a pour le retenir et positionner convenablement le ressort de compression 9c et le guider lors de sa compression.

Selon une caractéristique très avantageuse du dispositif antivol 1, le mécanisme de verrouillage est configuré pour bloquer le mécanisme de réglage lorsque la seconde partie d'antivol 6b est verrouillée sur la première partie d'antivol 6a. Le mécanisme de réglage bloqué, l'élévation par rapport au sol du support 7 et donc de la première partie d'antivol 6a est figée. A titre d'exemple d'une telle configuration du mécanisme de verrouillage et de sa coopération avec le mécanisme de réglage, on peut prévoir une crémaillère 12 solidaire du pied 8 et s'étendant longitudinalement dans le poteau tubulaire 7. Le mécanisme de verrouillage peut quant à lui être muni d'un cran, par exemple un cran formé sur le galet 10 porté par l'axe d'antivol 6d lui-même soutenu par le support 7 ou un cran porté par un cliquet 23 distinct du galet 10. Le cran, qu'il soit formé sur le galet 10 ou porté par un cliquet 23, est configuré pour s'engager dans la crémaillère 12 lorsque la seconde partie d'antivol 6b est rabattue sur la première partie d'antivol 6a, et que le galet est entraîné en rotation d'un quart de tour. La forme en came du galet 10 peut faciliter l'engagement du cran dans la crémaillère 12 lors de cette rotation, pour sélectivement engager le cran dans la crémaillère lorsque la seconde partie d'antivol 6b coiffe la première partie 6a dans la position refermée du dispositif antivol 1, et dégager le cran de la crémaillère 12 lorsque la seconde partie d'antivol 6b est relevée dans la position libre du dispositif antivol 1. Lorsque le cran est engagé dans la crémaillère, le mécanisme de réglage est bloqué et le mouvement de coulissement du support 7 n'est plus possible. Par « cran » et « crémaillère » on désigne dans le cadre de la présente demande tout mécanisme configuré pour coopérer ensemble et bloquer la liaison glissière existant entre le support 7 et le pied 8. Le cran peut ainsi prendre la forme de tout élément mécanique saillant apte à s'engager dans un évidemment formant crémaillère. Cette crémaillère peut notamment se présenter sous la forme d'une série d'orifices aménagée sur le pied ou sur une pièce solidaire du pied, ces orifices permettant d'accueillir un cran porté par le support 7 et ainsi bloquer la liaison.

D'autres mécanismes sont naturellement envisageables pour opérer le blocage du mécanisme de réglage en coordination avec le mécanisme de verrouillage. On peut ainsi prévoir que l'engagement/le dégagement du cran dans la crémaillère, notamment lorsque ce cran est porté par un cliquet 23, soit opéré par la serrure du mécanisme de verrouillage, par exemple entraîné par une clé lorsqu'une telle clé est exploitée pour verrouiller les deux parties d'antivol 6a,6b entre elles comme cela a été évoqué précédemment. On proposera dans une section suivante de cette description, une serrure électromécanique permettant de conjointement verrouiller les deux parties d'antivol 6a,6b et de bloquer le mécanisme de réglage. Dans tous les cas, un mécanisme de verrouillage conforme à ce mode de réalisation est avantageusement configuré pour bloquer le mécanisme de réglage lorsque la seconde partie d'antivol 6b est verrouillée sur la première partie d'antivol. L'élévation du support 7 et de la première partie d'antivol 6a par rapport au sol est dans ce cas figée. On note qu'il est particulièrement avantageux de rendre concomitant le blocage du mécanisme de réglage au verrouillage des deux parties d'antivol : on empêche ainsi de bloquer le mécanisme de réglage avec le ressort de piston compressé lorsque la seconde partie d'antivol est simplement rabattue sur la première partie 6a, cette position simplement refermée pouvant se relâcher brusquement et blesser l'utilisateur.

Pour sécuriser son véhicule à pédalier, par exemple sa bicyclette, un utilisateur positionne cette bicyclette dans un dispositif antivol 1 en position libre, le support 7 et la première partie d'antivol 6a étant en position d'accueil. Pour ce faire, l'utilisateur place le pédalier de la bicyclette dans le dispositif de sorte à caler une manivelle dans la gouttière 6c et contre la surface frontale de la première partie d'antivol 6a. Simultanément, l'utilisateur pose la pédale contre la surface d'appui de cette première partie 6a. La gorge 6e qui surmonte la gouttière se place dans l'espace e séparant la manivelle de la pédale. Ce positionnement, qui peut nécessiter de légèrement soulever la bicyclette du sol pour la faire reposer sur la première partie de l'antivol 6a, conduit à faire coulisser le support 7 vers le bas, le poids de la bicyclette appliquant un effort vertical tendant à mettre en compression le ressort 9c du piston 9. La raideur de ce ressort est préférentiellement choisie pour que, sous l'effet d'un poids moyen de bicyclette, le support 7 coulisse suffisamment et l'élévation de la première partie de l'antivol 6a s'ajuste vers le bas suffisamment pour que la bicyclette repose ses deux roues sur le sol, une fois convenablement positionnée sur le dispositif 1.

L'utilisateur peut ensuite opérer la seconde partie d'antivol 6b, par exemple en la manipulant par sa poignée 6g pour la rabattre sur la première partie 6a, la coiffer et ainsi retenir en étaux le pédalier. L'effort appliqué à la seconde partie d'antivol 6b par l'utilisateur est transmis au piston 9 par l'intermédiaire du galet 10 reposant sur (et soutenu par) la tête 9b du piston. Cet effet est amplifié par la forme avantageuse en came du galet 10, qui nécessite un effort initial accru de la part de l'utilisateur sur la seconde partie de l'antivol 6b pour initier la rotation de la came, afin de la dégager de sa position initiale. Cet effort accru tend donc à plaquer la bicyclette sur le sol. On note également que lorsque la seconde partie d'antivol 6b est entièrement rabattue sur la première partie 6a et que le galet 10 a parcouru un quart de tour, celui-ci se retrouve dans une position stable, c'est-à-dire que malgré l'effort de rappel exercé par le piston 9 sur le galet 10 du mécanisme de verrouillage, le dispositif antivol 1 reste figé en élévation. L'utilisateur peut donc, une fois la seconde partie d'antivol 6b entièrement rabattue sur la première partie 6a, relâcher l'effort exercé sur cette seconde partie 6b sans que le support 7 ne se relève et sans provoquer le pivotement en ouverture de la seconde partie d'antivol 6b. La position du dispositif antivol 1 étant refermée et stable, l'utilisateur peut donc actionner la serrure du mécanisme de verrouillage, par exemple par l'intermédiaire d'une clé. Comme on l'a déjà mentionné, le mécanisme de verrouillage est configuré pour bloquer le mécanisme de réglage, si bien que dans la position refermée du dispositif antivol 1, et avantageusement uniquement lorsque la serrure est engagée, le support 7 ne peut coulisser sur le pied 8.

Pour dégager la bicyclette du dispositif antivol 1, l'utilisateur déverrouille la seconde partie d'antivol 6b de la première partie 6a, par l'intermédiaire de la serrure. A nouveau, cette serrure peut être opérée par une clé ou par tout autre moyen, par exemple par l'intermédiaire d'un téléphone multifonction comme cela sera exposé dans une section ultérieure de cette description. L'utilisateur peut ensuite appliquer un effort sur cette seconde partie 6b, par exemple par l'intermédiaire de la poignée 6g, cet effort tendant à écarter, par pivotement, cette deuxième partie d'antivol 6b de la première 6a pour disposer le dispositif antivol 1 en position libre, libérant ainsi la bicyclette. Le déblocage du mécanisme de réglage peut être concomitant à l'étape de déverrouillage de la serrure ou, avantageusement pour éviter la libération brusque du support 7 repoussé par le piston 9, être provoqué par le pivotement de la seconde partie d'antivol 6b.

### Source pour alimenter en énergie électrique le dispositif antivol

Avantageusement, la serrure du dispositif de blocage est une serrure électromécanique. En d'autres termes, la serrure est alimentée électriquement pour sélectivement engager et dégager une extrémité distale 11a du pêne 11 de serrure dans l'orifice de blocage du galet 10. On bloque et libère ainsi sélectivement la rotation de l'axe d'antivol 6d. On peut alors munir le dispositif 1 de bouton-poussoir permettant à l'utilisateur, par simple pression du doigt, de verrouiller et déverrouiller l'antivol. Les boutons-poussoirs peuvent se présenter sous la forme d'un clavier et permettre à l'utilisateur d'entrer un code de verrouillage/déverrouillage de la serrure. Le dispositif antivol 1 s'opère dans ce cas à la manière d'une armoire de consigne.

Pour permettre le fonctionnement de cette serrure électromécanique, le dispositif antivol 1 doit être alimenté électriquement. Cela peut être obtenu en reliant ce dispositif à un réseau électrique et par l'intermédiaire d'un convertisseur électrique d'ajustement de tension. Toutefois, cette approche est relativement lourde à mettre en œuvre, car elle nécessite de disposer d'un tel réseau électrique à proximité du dispositif 1 et/ou d'engager des travaux importants de génie civil pour permettre le raccordement du dispositif 1 à ce réseau. Aussi, et de manière avantageuse, le dispositif antivol 1 est muni d'au moins une source d'énergie renouvelable, cette source étant électriquement associée à la serrure électromécanique. La source peut être reliée à d'autres éléments nécessitant d'être alimentés électriquement du dispositif 1 comme cela sera exposé dans une section suivante. Cette source d'énergie renouvelable peut notamment comprendre un panneau solaire. Mais avantageusement, cette source comprend un récupérateur d'énergie mécanique. On peut bien entendu prévoir de combiner plusieurs sources d'énergies renouvelables, par exemple un panneau solaire combiné à un récupérateur d'énergie mécanique. L'énergie produite ou récupérée peut être emmagasinée dans des moyens de stockage 19, par exemple une batterie électrique ou une capacité électrique. Les moyens de stockage peuvent comprendre un régulateur de tension apte à fournir une tension électrique continue exploitable par les éléments auxquels les moyens de stockages sont reliés.

A titre d'exemple, le récupérateur d'énergie mécanique peut être associé à la deuxième partie d'antivol 6b, afin de récupérer l'énergie à partir du mouvement de rotation de cette deuxième partie 6b, lorsqu'elle est rabattue sur la première partie 6a par l'utilisateur. Dans cet exemple, on peut coupler l'axe d'antivol 6d directement, ou indirectement par un train d'engrenage, à un générateur 17, par exemple une dynamo. L'énergie produite par le générateur 17 peut être emmagasinée dans le moyen de stockage 19 et être exploitée par la serrure électromécanique.

Retournant à la description des figures 1a,1b,2a,2b,2c on décrit un récupérateur d'énergie mécanique dont est équipé le mode de réalisation préférentiel représenté.

Ce récupérateur d'énergie est ainsi formé d'une coiffe 13 surmontant le sommet du support 7. La coiffe 13 comprend également une plaque 14 percée d'une ouverture longitudinale 14a. La plaque 14 est solidaire du fond de la coiffe 13. La plaque 14 est disposée à du support, ici le poteau tubulaire 7, lorsque la coiffe 13 est positionnée pour recouvrir le sommet du support 7.

La plaque 14 est retenue au poteau tubulaire 7 par l'intermédiaire d'un mécanisme de rappel, ici formé de deux ressorts 15 visibles sur la [Fig.2c]. Les ressorts 15 présentent des extrémités supérieures 15a engagées respectivement dans des pions transversaux solidaires du poteau tubulaire 7 et des extrémités inférieures 15b respectivement engagées dans des pions de retenu solidaires de la plaque 14. Cet arrangement permet de rendre flottante la coiffe 13 vis-à-vis du poteau tubulaire 7 : lorsqu'une pression est appliquée sur la partie supérieure de la coiffe 14, celle-ci coulisse sur le poteau 7, ce qui tend à étendre les ressorts 15. Dans ce mouvement de coulissement, le support 7 pénètre dans la partie interne de la coiffe 13. Lorsque la pression appliquée sur la partie supérieure de la coiffe 14 est interrompue, les ressorts 15 du mécanisme de rappel tendent à replacer la coiffe 13 dans sa position d'origine, et la coiffe 13 tend à s'extraire du support 7. La raideur des ressorts 15 est bien plus petite que celle du ressort de compression 9c du piston 9, si bien que la pression appliquée sur la coiffe 13 tend à préférentiellement déplacer celle-ci sur la partie supérieure du poteau tubulaire 7, plutôt que de déplacer en coulissement le poteau tubulaire 7 sur le pied 8.

En tout état de cause, la coiffe 13 est apte à se déplacer en translation longitudinale sur le poteau 7 par application d'un effort extérieur et un mécanisme de rappel formé d'au moins un ressort 15 permet de replacer, au cours d'un déplacement inverse, la coiffe 13 dans sa position d'origine lorsque l'application de l'effort extérieur est interrompue. Le récupérateur d'énergie mécanique peut être configuré pour que le déplacement, et le déplacement inverse puissent par exemple s'étendre sur une distance d'une dizaine de centimètres environ.

Le récupérateur d'énergie mécanique comprend également un mécanisme d'entraînement relié à la coiffe 13 et à un générateur 17, pour transformer en énergie électrique le déplacement de la coiffe 13. Ce mécanisme d'entraînement comprend un train d'engrenage comportant une roue ou un cylindre denté 16 engagé dans l'ouverture 14a de la plaque 14. Cette ouverture 14a présente un contour cranté, si bien que le déplacement longitudinal de la plaque entraîne en rotation la roue ou le cylindre denté 16. Plus généralement, le train d'engrenage peut être couplé à une crémaillère portée par la plaque 14 de la coiffe 13. Quelle que soit la nature de ce couplage, le train comporte également une roue ou un cylindre final qui entraîne en rotation un arbre d'entraînement 17a d'un générateur 17, par exemple une dynamo. On comprend donc que le coulissement de la coiffe 13 sur le poteau tubulaire 7 entraîne la mise en rotation de l'arbre d'entraînement 17a du générateur 17, par l'intermédiaire du mécanisme d'entraînement. L'énergie électrique produite par le générateur 17 peut être emmagasinée dans les moyens de stockage 19 auquel le générateur 17 est relié.

Un utilisateur souhaitant donc utiliser le dispositif antivol 1 comprenant un tel récupérateur d'énergie mécanique, applique un effort sur le sommet de la coiffe, par exemple par appui maintenu de la main sur ce sommet, afin de provoquer le coulissement de cette coiffe sur le poteau 7 et produire suffisamment d'énergie pour alimenter la serrure. Cette étape peut être conduite alors que le dispositif antivol 1 est en position libre, avant ou après avoir installé la bicyclette sur la première partie d'antivol 6a, ou lorsque le dispositif antivol 1 est en position refermée.

Selon un développement particulièrement avantageux, le train d'engrenage, ou un élément de ce train tel que la roue ou le cylindre cranté 16, est à roue libre. En conséquence, l'arbre 17a du générateur 17 n'est entraîné qu'au cours du déplacement inverse de la coiffe 13 vers sa position d'origine, alors que l'utilisateur n'exerce plus de pression sur celle-ci. Ce développement est intéressant en ce qu'il protège le récupérateur d'énergie mécanique, et notamment le générateur 17 et la roue crantée 16, d'efforts violents que l'utilisateur pourrait appliquer sur la coiffe et des pics d'énergie générés par ces efforts violents. Le déplacement inverse est quant à lui bien maîtrisé par le mécanisme de rappel, il peut être conduit à une vitesse adaptée, en maîtrisant la raideur des ressorts 15, pour optimiser l'énergie produite et en rendant indépendant cette énergie de l'intensité de l'effort appliqué par l'utilisateur. La quantité d'énergie produite est donc rendue relativement indépendante de l'utilisateur.

### Unité de commande et procédé de commande d'une serrure

Lorsque le dispositif antivol est alimenté électriquement, par une source d'énergie renouvelable ou en étant relié à un réseau électrique, il est avantageux de l'équiper le dispositif antivol 1 d'une unité de commande 18 permettant d'automatiser son fonctionnement. En particulier, l'unité de commande 18 peut permettre d'opérer la serrure, dans ce cas une serrure électromécanique, pour verrouiller les deux parties d'antivol 6a, 6b entre elles et, le cas échéant, d'activer le cliquet 23 permettant de bloquer le mécanisme de réglage. Cette unité de commande 18 peut être téléopérée à partir d'un dispositif de traitement portable détenu par l'utilisateur, typiquement un smartphone, c'est-à-dire un téléphone mobile multifonctions.

On note que l'unité de commande 18 de la serrure électromécanique et que le procédé de commande de cette serrure, forme un aspect en soi de l'invention. Elle peut trouver une application dans de nombreux domaines, et son usage n'est donc nullement limité au dispositif antivol 1 pour véhicule à pédalier. On peut par exemple envisager d'exploiter cette unité de commande pour une boîte à clé, la serrure électromécanique permettant dans ce cas de placer l'extrémité distale du pêne de serrure dans une gâche conventionnelle aménagée sur la boîte. Elle peut être alimentée en énergie électrique par une source d'énergie renouvelable, tel que le récupérateur d'énergie qui a fait l'objet d'une section précédente. La description qui suit de cette unité de commande et du procédé de commande est toutefois réalisée dans le contexte du dispositif antivol 1 de la description.

On a représenté sur la [Fig.4] de manière schématique une telle unité de commande 18 associée, dans l'exemple représenté, à un générateur 17 d'un récupérateur d'énergie mécanique, mais qui pourrait tout aussi bien être associé à une source d'énergie électrique d'une autre nature. Cette unité de commande 18 est préférentiellement logée dans le support 7 du dispositif antivol 1 afin de faciliter son raccordement électrique au générateur 17 et à la serrure électromécanique. Avantageusement, l'unité de commande 20 est disposée au plus près du verrou, dans un boitier sécurisé, afin de limiter le risque d'effraction. L'unité de commande 18 comprend les moyens de stockage 19, batterie ou capacité, électriquement reliés au générateur 17, afin d'emmagasiner l'énergie produite. Ces moyens de stockage délivrent cette énergie électrique à l'ensemble des éléments composant l'unité de commande 18 afin de les alimenter électriquement, lorsqu'un interrupteur d'alimentation K0 est activé comme cela sera détaillé dans la suite de cette section de la présente description. L'énergie électrique est également délivrée des moyens de stockage 19 à la serrure par l'intermédiaire de fils électriques de connexion (non représentés sur la figure).

On note qu'un récupérateur d'énergie mécanique n'est pas susceptible de fournir une grande quantité d'énergie, de l'ordre de 1 Joule ou de quelques Joules tout au plus. Il est donc essentiel que la consommation électrique du dispositif antivol 1 soit aussi faible que possible. Cette consommation d'énergie électrique n'est nécessaire que pendant les séquences de verrouillage et de déverrouillage du dispositif 1. Aussi, ces séquences sont-elles généralement précédées par l'activation par l'utilisateur du récupérateur d'énergie mécanique, en appliquant une poussée sur la coiffe 13, comme cela a été exposé dans l'un des paragraphes précédents, afin de permettre le fonctionnement de l'unité de commande 18 et de la serrure électromécanique.

L'unité de commande 18 comprend un contrôleur 20, par exemple un micro-contrôleur ou tout autre circuit programmable par logiciel ou matériellement. Le contrôleur 20 est configuré pour mettre en œuvre le procédé de commande du verrou, en coordination avec le dispositif de traitement portable de l'utilisateur.

Le contrôleur 20 est électriquement relié à un circuit de communication 21 comprenant une antenne 21a. Avantageusement, ce circuit de communication est un circuit de communication passif et à courte portée, du type NFC (pour « near field communication » ou communication à champ proche). Il est bien connu que ce type de communication est particulièrement peu consommateur d'énergie. L'antenne 21a peut être disposée dans la coiffe 13, de sorte que l'utilisateur puisse, en disposant simplement son dispositif de traitement portable sur le sommet de cette coiffe 13, coupler électromagnétiquement l'antenne de ce dispositif à l'antenne 21a de l'unité de commande 18.

L'antenne 21a est également reliée au contrôleur 20. Lorsque l'utilisateur cherche, par l'intermédiaire de son dispositif de traitement portable, à se connecter à l'unité de commande 18, l'antenne de ce dispositif produit un rayonnement d'émission. Ce rayonnement est capté par l'antenne 21a de l'unité de commande 18, et son énergie est exploitée pour alimenter électriquement le circuit de communication 21 et le contrôleur 20.

Le circuit de communication 21 engage l'appariement de l'unité de commande 18 au dispositif de traitement portable de l'utilisateur. Cet appariement, initié par le dispositif de traitement portable, permet d'établir une communication entre ce dispositif et l'unité de commande 18.

Le contrôleur 20 est relié aux moyens de stockage 19 afin d'y puiser de l'énergie et être apte à en mesurer le niveau d'énergie. On a ici prévu un interrupteur d'alimentation K0 permettant au contrôleur 20 de connecter l'unité de commande 18 aux moyens de stockage 19, pour alimenter électriquement cette unité 18 par ces moyens plutôt qu'en exploitant l'énergie captée par l'antenne 21a, cette énergie étant nécessairement limitée.

Le contrôleur 20 est également électriquement relié à une pluralité d'actionneurs, ici un interrupteur d'ouverture O et un interrupteur de fermeture C de la serrure électromécanique. Ces interrupteurs permettent d'opérer des actionneurs magnétiques, comme cela sera exposé dans une section suivante de cette description. Dans une telle configuration, qui est particulièrement avantageuse en termes de consommation d'énergie, le contrôleur 20 envoie une impulsion électrique de courte durée sur l'un des actionneurs magnétiques de la serrure en basculant brièvement l'interrupteur d'ouverture ou de fermeture O,C afin de sélectivement engager ou dégager l'extrémité distale du pêne dans la gâche de serrure, ici l'orifice de blocage 10a du galet 10 en forme de came.

L'unité de commande 18 peut également comprendre ou être reliée à au moins un capteur. Dans l'exemple représenté sur la [Fig.4], cette unité de commande 18 est reliée à un premier capteur K1 de position de la seconde partie d'antivol 6b. Ce premier capteur K1, qui peut prendre la forme d'un simple contacteur, produit un signal électrique déterminé lorsque la seconde partie d'antivol 6b est rabattue sur la première partie d'antivol 6a, c'est-à-dire lorsque le dispositif antivol 1 est en position occupée. L'unité de commande 18 est également reliée à un second capteur K2 de position, engagé ou désengagé de l'extrémité distale du pêne de serrure. Ce second capteur K2 qui peut également prendre la forme d'un simple contacteur produit un signal déterminé lorsque le pêne de serrure 11 est engagé dans l'orifice de blocage du galet 10.

On peut bien évidemment prévoir d'autres éléments reliés à l'unité de commande 18 ou inclus dans cette unité. Dans l'exemple illustré, on a ainsi prévu de relier cette unité à un témoin lumineux 22, le témoin étant disposé sur la coiffe 13 du support 7. Ce témoin lumineux 22 est commandé par le contrôleur 20 de l'unité de commande 18, la couleur d'émission du témoin étant choisie pour communiquer à l'utilisateur l'état du dispositif antivol 1. Ainsi, l'absence d'émission lumineuse peut permettre d'indiquer que l'unité de commande n'est pas active, par exemple que les moyens de stockage d'énergie sont épuisés. Une émission de couleur verte peut permettre d'indiquer à l'utilisateur que le dispositif antivol 1 est en position libre et que les moyens de stockage d'énergie sont suffisants. Une émission de couleur rouge peut permettre d'indiquer à l'utilisateur que le dispositif antivol 1 est en position occupé. Une émission de couleur jaune peut permettre d'indiquer que le dispositif antivol 1 n'est pas fonctionnel.

L'utilisateur est équipé de son dispositif de traitement portable. Celui-ci exécute une application informatique destinée à se coupler à l'unité de commande 20 du dispositif antivol 1 afin de commander le verrouillage (une fois le véhicule convenablement disposé dans/sur ce dispositif 1) ou pour commander le déverrouillage du dispositif 1 pour libérer le véhicule. Le verrouillage/déverrouillage du dispositif antivol 1 doit bien entendu être sécurisé, c'est-à-dire être réservé à un utilisateur unique. Le dispositif de traitement portable émet donc un rayonnement électromagnétique d'émission visant à établir une voie de communication avec l'unité de commande 20. Par ailleurs, l'utilisateur a préalablement activé le récupérateur d'énergie électrique pour emplir suffisamment les moyens de stockage 19, de l'ordre d'un Joule ou de quelques Joules.

Le réveil de l'unité de commande 18 s'engage lorsque l'utilisateur « éclaire » l'antenne 21a de cette unité avec le rayonnement électromagnétique d'émission produit le dispositif de traitement portable, par exemple en positionnant ce dispositif sur la coiffe 13, au plus près de l'antenne 21a. Comme on l'a déjà mentionné, l'énergie de ce rayonnement est exploitée pour alimenter électriquement, pendant cette phase d'activation, le circuit de communication 21 et le contrôleur 20. Au cours de cette phase, le circuit de communication 21 s'éveil et procède à l'appariement de l'unité de commande 18 avec le dispositif de traitement portable de l'utilisateur. A l'issue de cette phase d'activation, l'unité de commande 18 est éveillée et alimentée électriquement par le rayonnement reçu du dispositif de traitement portable de l'utilisateur, l'unité de commande 18 et le dispositif de traitement portable sont aptes à communiquer entre eux.

Dans ce contexte, on expose maintenant les traitements réalisés par le contrôleur 20 de l'unité de commande 18, à son éveil.

Au cours d'une première étape, le contrôleur 20 vérifie le niveau d'énergie des moyens de stockage 19, par exemple en mesurant la tension d'alimentation fournie par ces moyens 19. S'il est déterminé que ce niveau d'énergie ne dépasse pas un seuil déterminé, suffisant pour mener une opération de verrouillage ou de déverrouillage de la serrure, le contrôleur 20 communique au dispositif de traitement portable que le niveau d'énergie est trop faible. Le témoin lumineux 22 reste éteint, ce qui signale indirectement à l'utilisateur le non-fonctionnement du dispositif antivol 1, et l'incite à réactiver le récupérateur d'énergie mécanique. Le contrôleur peut répéter cette vérification du niveau de charge des moyens de stockage 19 après un temps d'attente prédéterminé. Si ce niveau d'énergie reste insuffisant, après avoir répété la vérification plusieurs fois, le contrôleur 20 s'éteint.

Dans le cas où le niveau d'énergie détenu dans les moyens de stockage 19 est jugé suffisant au cours de cette première étape, supérieur ou égal au seuil déterminé, le contrôleur 20 déclenche l'interrupteur K0 permettant d'alimenter l'unité de commande 18 par le moyen de stockage 19, plutôt que par l'énergie captée par l'antenne 21a.

Le contrôleur vérifie au cours d'une étape l'état du dispositif antivol 1, en mesurant l'état du premier et/ou du second capteur K1,K2. Selon l'état de ces capteurs K1,K2, et notamment du second capteur K2, le contrôleur 20 commande le témoin lumineux 22 pour émettre une couleur verte ou rouge indiquant à l'utilisateur l'état libre ou occupé du dispositif antivol 1.

On se place maintenant dans le cas où l'utilisateur, qui a placé convenablement son véhicule dans le dispositif antivol 1, souhaite le verrouiller.

Dans une troisième étape, le contrôleur 20 vérifie que la seconde partie de l'antivol 6b est en position refermée via le premier capteur de position K1. S'il ne l'est pas, il indique à l'utilisateur de mettre cette partie de l'antivol en position fermée via le dispositif de traitement portable et éventuellement par un clignotement du témoin lumineux 22.

Au cours d'une quatrième étape, et une fois la seconde partie de l'antivol 6b en position refermée, le contrôleur 20 adresse, par l'intermédiaire du circuit de communication 21, au dispositif de traitement portable un numéro unique d'identification. Ce numéro unique est reçu par le dispositif de traitement portable et mémorisé par ce dispositif. On peut prévoir que l'application s'exécutant sur le dispositif de traitement portable traite ce numéro unique d'identification pour déterminer si l'utilisateur est autorisé à utiliser le dispositif antivol 1. Il peut par exemple s'agir de procéder à un paiement ou à prélever un jeton d'un ensemble de jetons disponibles. Le dispositif de traitement portable peut contacter un serveur distant pour procéder à ce paiement et/ou obtenir une autorisation, mais cela n'est pas impératif. En tout état de cause, après avoir reçu et mémorisé le numéro unique d'identification du dispositif antivol 1, et si l'utilisateur est autorisé à utiliser le dispositif, le dispositif de traitement portable de l'utilisateur adresse à l'unité de commande 18 un code unique de verrouillage. Ce code unique de verrouillage a pu être généré par le dispositif de traitement portable lui-même ou reçu d'un serveur distant.

Dans une cinquième étape suivante du procédé mise en œuvre par le contrôleur 20 de l'unité de commande 18, celui-ci reçoit le code unique de verrouillage et le mémorise, par exemple dans une mémoire non volatile du contrôleur 20.

Puis, dans une sixième étape de verrouillage, le contrôleur 20 émet une impulsion sur le port d'entrée/sortie relié au contacteur de fermeture C de la serrure électromagnétique. La serrure verrouille le dispositif antivol 1. Cette étape de verrouillage peut comprendre l'actionnement d'un cliquet 23 permettant le blocage du mécanisme de réglage, comme cela a été décrit dans une section précédente. Cette étape de verrouillage peut comprendre la vérification que le pêne de serrure 11 est bien engagé dans l'orifice du galet, en procédant à la mesure de l'état du second capteur K2. Le témoin lumineux peut être activé pour émettre une couleur rouge, si le verrouillage est bien opéré ou au contraire une lumière orange ou clignotante dans le cas contraire.

A l'issue de l'étape de verrouillage, et lorsque ce verrouillage est bien confirmé par l'état du second capteur K2, le contrôleur 20 peut adresser dans une étape finale de confirmation, par l'intermédiaire du circuit de communication 21, un message au dispositif de traitement portable indiquant le bon verrouillage du dispositif 1. Cet envoi peut être suivi du désappariement de l'unité de commande 20 au dispositif de traitement portable et de la mise en veille, voire même à l'extinction de l'unité de commande 20.

On se place maintenant dans le cas où l'utilisateur souhaite libérer son véhicule du dispositif antivol 1, étant entendu que les première et seconde étapes décrites précédemment ont bien été réalisées.

Dans ce contexte, on reproduit les quatrième et cinquième étapes de réception et d'envoi du numéro unique d'identification et du code unique de verrouillage.

Le contrôleur 20 de l'unité de commande 18 qui reçoit le code unique de verrouillage vérifie que celui-ci correspond bien à celui produit et mémorisé lors du verrouillage du véhicule dans le dispositif antivol 1. Si c'est bien le cas, le contrôleur 20 émet une impulsion sur le port d'entrée/sortie relié au contacteur d'ouverture O de la serrure électromagnétique. La serrure déverrouille le dispositif antivol 1.

L'unité de commande 18 du verrou électromécanique et le procédé de commande de ce verrou qui viennent d'être présentés sont particulièrement avantageux. L'unité de commande exploite le dispositif de traitement portable de l'utilisateur pour, éventuellement et en cas de besoin, contacter un serveur distant d'administration. Il n'est pas nécessaire que l'unité de commande soit en contact direct avec ce serveur. Avantageusement donc, un dispositif antivol conforme à l'invention est dépourvu de tous moyens de communication apte à le connecter directement à un serveur distant, et il comprend donc uniquement un circuit de communication à champ proche. Le dispositif antivol 1 peut donc rester simple et peu consommateur d'énergie électrique.

L'unité de commande 18 est éveillée par le dispositif de traitement portable, il n'est donc pas nécessaire d'alimenter cette unité électriquement de manière continue. L'alimentation électrique de l'unité de commande est ensuite basculée depuis cette première source d'énergie vers la seconde source d'énergie constituée des moyens de stockage 19 associée à la source d'énergie renouvelable. Ce basculement n'est réalisé que si l'énergie détenue dans les moyens de stockage 19 est suffisante pour compléter l'opération de verrouillage/déverrouillage. On note donc que cette unité est alimentée électriquement uniquement pendant les courtes séquences de verrouillage et de déverrouillage. L'énergie consommée pendant chacune de ces séquences peut être produite par l'utilisateur au moment voulu, en activant le récupérateur d'énergie mécanique. Il n'est notamment pas nécessaire de maintenir l'alimentation électrique du dispositif antivol pour maintenir fermé le verrou électromécanique, et seules les opérations de verrouillage et de déverrouillage de cette serrure nécessitent une brève impulsion électrique afin d'activer de manière transitoire les actionneurs magnétiques d'activation de la serrure.

### Serrure électromécanique

En référence aux figures 5a,5b,5c,6a et 6b on présente maintenant un exemple de réalisation d'une serrure électromécanique d'un mécanisme de verrouillage du dispositif antivol 1. Cette serrure forme un aspect de l'invention en soi, sans nécessairement être incorporée dans le dispositif antivol 1 du véhicule à pédalier qui fait l'objet de la présente description. A titre d'illustration, cette serrure peut être employée dans un dispositif antivol d'une boîte à clé. Plus généralement, la serrure peut être exploitée pour sécuriser l'accès à un objet détenu dans une armoire de consigne. Elle peut être employée pour verrouiller/déverrouiller un portillon.

D'une manière générale, le pêne de serrure est destiné à s'engager dans une gâche d'un élément support, la gâche du dispositif d'antivol 1 d'un véhicule à pédalier étant formé dans l'exemple décrit dans les paragraphes précédents par l'orifice aménagé dans le galet 10 du mécanisme de verrouillage.

On retrouve sur les figures 5a, 5b, 5c, le galet 10 en forme de came et le cliquet 23. Le galet 10 est muni d'un orifice 10a, bien visible sur la [Fig.5a], pour recevoir l'extrémité distale du pêne 11. Le galet 10 est également muni d'un pion d'entraînement 10b destiné à entraîner le cliquet 23 lorsqu'il entre en contact avec la butée de cliquet 23a. Le cliquet 23 comprend également un ergot de retenue 23c coopérant avec une languette de retenue 26 pour retenir le cliquet 23 dans une position dans laquelle le cran de cliquet 23a est éloigné et dégagé de la crémaillère 12 du mécanisme de réglage. La languette de retenue 26 est associée à un ressort de retenue 26a tendant à la faire descendre vers le cliquet 23 pour se placer derrière l'ergot de retenue 23c. Le cliquet 23 est maintenu en tension par un ressort de verrouillage 32 tendant à plaquer le cran de cliquet 23b contre la crémaillère 12 du pied 8 lorsque la languette de retenue 26 est soulevée pour se dégager de l'ergot de retenue 23c.

Le verrou 24 comprend également deux actionneurs magnétiques 27a,27b (désignés « électroaimants » dans le domaine et dans la suite de cette description) disposés de part et d'autre du galet 10. Un tel actionneur comprend un bloc d'actionnement magnétique et une tige, l'actionneur étant apte à sélectivement déplacer en translation une tige entre une position sortie et une position entrée de la tige dans le bloc d'actionnement magnétique. Un mécanisme bistable disposé entre les deux électroaimants 27a,27b porte le pêne de serrure 11. Par mécanisme bistable, on désigne un mécanisme qui peut prendre deux positions stables, le basculement d'une position à une autre nécessitant un apport d'énergie. L'activation d'un premier électroaimant 27a permet de faire basculer le mécanisme bistable dans une première position stable dans lequel l'extrémité distale du pêne 11 n'est pas engagée dans l'orifice 10a ([Fig.6a]), et l'activation d'un second électroaimant 27b permet de faire basculer le mécanisme bistable dans une seconde position stable dans lequel l'extrémité distale du pêne 11 est engagée dans l'orifice 10a ([Fig.6b]). Les électroaimants forment les interrupteurs d'ouverture ou de fermeture O,C auxquels est reliée l'unité de commande 18 pour sélectivement les activer.

En référence aux figures 6a,6b, le mécanisme bistable est ici composé d'un palonnier 28 comprenant une verge 28c dont une première extrémité est munie d'un pion de guidage engagé dans une rainure d'un support de serrure. Le palonnier 28 comprend également deux bras 28a,28b, auxquels sont respectivement retenus les tiges 29a,29b des électroaimants, les deux bras se réunissant à une seconde extrémité de la verge 28c, au niveau d'un collet. Le collet est muni d'un axe de collet 30, autour duquel le palonnier 28 et le pêne de verrou 11 sont réunis et autour duquel le mécanisme bistable peut basculer. Le mécanisme bistable comprend également un ressort de basculement 31 retenu à la première extrémité de la verge 28c du palonnier 28 et au pêne 11.

La languette de retenue 26 est associée, en liaison glissière, au bras 28a du palonnier 28 couplé au premier électroaimant 27a. La languette de retenue 26 est entraînée vers le haut lorsque le palonnier 28 bascule pour provoquer le verrouillage, et ainsi libérer le cliquet 23 pour bloquer le mécanisme de réglage. La languette de retenue 26 n'est pas entraînée vers le bas par le bras 28 lorsque le palonnier 28 bascule pour provoquer le déverrouillage. C'est le ressort de retenue 26a qui tend à faire redescendre la languette de retenue 26 vers le cliquet 23, lorsque le cliquet 23 a été placé en position désengagée de la crémaillère 12 en relevant la deuxième partie d'antivol 6b.

Les figures 6a et 6b montrent comment l'activation de l'un ou de l'autre des deux électroaimants 27a,27b permet de positionner l'élément bistable dans l'un ou l'autre de ces deux états stables, c'est-à-dire des états maintenus même lorsque les électroaimants sont désactivés.

La [Fig.5a] montre l'état du verrou 24 dans la position libre du dispositif antivol 1. Lorsque la seconde partie d'antivol 6b est écartée de la première partie 6a par pivotement, la rotation de l'axe d'antivol 6d, du galet 10 et de son pion 10b conduit à dégager le cran de cliquet 23b de la crémaillère 12 du mécanisme de réglage, le pion 10b entrant en contact avec la butée 23a et entraînant le cliquet 23. Ce pivotement d'ouverture de la seconde partie d'antivol 6b conduit également à comprimer le ressort de verrouillage 32, et à placer la languette de retenue 26 derrière l'ergot de retenue 23c. On maintient ainsi le cliquet 23 dans une position dans lequel il n'est pas engagé dans la crémaillère 12. Le mécanisme de réglage est libéré et le support 7 peut coulisser sur le pied 8. On observe sur la [Fig.5a] que, dans cette position libre du dispositif antivol 1a, la seconde partie d'antivol 6b étant relevée, l'orifice 10a du galet 10 n'est pas placé en vis-à-vis de l'extrémité distale du pêne de serrure 11. Il n'est donc pas possible d'engager cette extrémité dans l'orifice pour verrouiller le dispositif 1.

La [Fig.5b] montre l'état du verrou 24 dans la position refermée du dispositif antivol 1, sans toutefois que le verrou 24 n'ait été encore activé. Le galet 10 a été déplacé d'un quart de tour, pour mettre l'orifice 10a en vis-à-vis de l'extrémité distale du pêne de serrure 11. Le cliquet 23 est toujours retenu par la languette 26, et mis en tension par le ressort de verrouillage 32.

La [Fig.5c] montre l'état du verrou 24 dans la position refermée du dispositif antivol 1 et après activation du verrou 24, c'est-à-dire après que l'actionneur magnétique de verrouillage 27b ait été activé par l'unité de commande 18 afin de faire basculer le mécanisme bistable selon la configuration de la [Fig.6b]. L'extrémité distale du pêne de serrure 11 est engagée dans l'orifice 10a du galet. En basculant, le mécanisme bistable a également soulevé la languette de retenue 26, libérant le cliquet 23 et engageant le cran 23b dans la crémaillère du mécanisme de réglage pour le bloquer.

On peut prévoir un mécanisme additionnel visant à bloquer le pêne de serrure 11 dans l'orifice 10a du galet 10. Ce mécanisme additionnel vise à empêcher le basculement du pêne de serrure, lorsque par exemple on applique des chocs violents sur le support 7, dans une tentative d'effraction, ces chocs tendant à provoquer le basculement de pêne de serrure. Le mécanisme additionnel peut être porté par la languette de retenue 26, par exemple une extension de cette languette 26 venant occulter la face latérale de l'orifice 10a, de sorte que l'extrémité distale du pêne de retenue ne puisse s'échapper de cet orifice 10a lorsque la languette est en position relevée.

Bien entendu l'invention n'est pas limitée aux modes de mise en œuvre décrits et on peut y apporter des variantes de réalisation sans sortir du cadre de l'invention tel que défini par les revendications.

## Revendications

1. Dispositif antivol (1) pour véhicule à pédalier, le dispositif comprenant :
a. une première partie d'antivol (6a), solidaire d'un support (7), et présentant un logement (6c) destiné à recevoir une manivelle de pédalier ;
b. une seconde partie d'antivol (6b), portée par le support (7), destinée à se rabattre sur la première partie d'antivol (6a) pour la coiffer et bloquer la manivelle de pédalier ;
c. Un mécanisme de verrouillage, également porté par le support (7), visant à verrouiller la seconde partie d'antivol (6b) sur la première partie d'antivol (6a) ;
le dispositif antivol (1) étant **caractérisé en ce qu'**il comprend un mécanisme de réglage pour ajuster une élévation de la première partie d'antivol (6a) par rapport au sol, le mécanisme de verrouillage étant en outre configuré pour bloquer le mécanisme de réglage lorsque la seconde partie d'antivol (6b) est verrouillée sur la première partie d'antivol (6a) et ainsi figer son élévation.

2. Dispositif antivol (1) selon la revendication précédente dans lequel le support (7) porte un axe d'antivol (6d), la seconde partie d'antivol (6b) étant reliée à l'axe d'antivol (6d) de manière à être rabattue par pivotement sur la première partie d'antivol (6a).

3. Dispositif antivol (1) selon l'une des revendications précédentes dans lequel le mécanisme de réglage comprend une crémaillère (12) et le mécanisme de verrouillage comprend un cliquet (23) configuré pour s'engager dans la crémaillère (12).

4. Dispositif antivol (1) selon l'une des revendications précédentes dans lequel le support (7) est un poteau tubulaire s'étendant selon une direction longitudinale sensiblement verticale.

5. Dispositif antivol (1) selon la revendication précédente dans lequel le mécanisme de réglage comprend un pied tubulaire (6) destiné à reposer sur le sol, le pied tubulaire (6) étant configuré pour s'engager dans le poteau tubulaire (7) et permettre à celui-ci de coulisser.

6. Dispositif antivol (1) selon la revendication précédente dans lequel le mécanisme de réglage comprend un piston (9) comprenant une tête de piston (9b), le piston étant disposé dans le pied tubulaire (6) et la tête de piston soutenant le poteau tubulaire (7).

7. Dispositif antivol (1) selon la revendication précédente dans lequel le piston (9) comprend un corps de piston (9a), un ressort de compression (9c) disposé dans le corps de piston (9a) et une tige (9d) pour retenir le ressort de compression (9c) dans le corps de piston (9a).

8. Dispositif antivol (1) selon l'une des revendications 6 à 7 dans lequel le mécanisme de verrouillage comprend un galet (10) solidaire de l'axe d'antivol (6d) et en contact avec le piston (9).

9. Dispositif antivol (1) selon la revendication précédente dans lequel le galet (10) du mécanisme de verrouillage prend la forme d'une came.

10. Dispositif antivol (1) selon l'une des deux revendications précédentes dans lequel le mécanisme de verrouillage comprend une serrure, la serrure comportant un pêne de serrure (11) destiné à s'engager dans un orifice de blocage (10a) du galet (10).

11. Dispositif antivol (1) selon la revendication précédente dans lequel la serrure est alimentée électriquement pour sélectivement engager et dégager le pêne de serrure (11) de l'orifice de blocage (10a) du galet (10).

12. Dispositif antivol (1) selon l'une des revendications 10 à 11 comprenant une source d'énergie renouvelable associée à la serrure.

13. Dispositif antivol (1) selon la revendication précédente dans lequel la source d'énergie renouvelable est un récupérateur d'énergie mécanique.

14. Dispositif antivol (1) selon la revendication précédente dans lequel le récupérateur d'énergie mécanique comprend :
a. Une coiffe (13) disposée sur le sommet du support (7), la coiffe (13) étant apte à se déplacer en translation longitudinale à partir d'une position d'origine sur le support par application d'un effort extérieur ;
b. Un mécanisme de rappel (15) pour replacer, au cours d'un déplacement retour, la coiffe (13) dans sa position d'origine lorsque l'application de l'effort extérieur est interrompue ;
c. Un mécanisme d'entraînement relié à la coiffe (13) et à un générateur (17), pour transformer en énergie électrique le déplacement de la coiffe.

15. Dispositif antivol (1) selon la revendication précédente dans lequel le mécanisme d'entraînement est à roue libre, de sorte que le générateur (17) n'est entraîné qu'au cours du déplacement retour de la coiffe (13).

16. Dispositif antivol (1) selon l'une des revendications 11 à 15 dans lequel le mécanisme de verrouillage comprend une unité de commande (18) pour opérer la serrure, l'unité de commande (18) comprenant un circuit de communication à champ proche.

## Patentansprüche

1. Diebstahlsicherungsvorrichtung (1) für ein Fahrzeug mit Kurbelgarnitur, wobei die Vorrichtung umfasst:
a. ein erstes Diebstahlsicherungsteil (6a), das fest mit einem Träger (7) verbunden ist und eine Aufnahme (6c) zur Aufnahme einer Tretkurbel aufweist;
b. ein zweites Diebstahlsicherungsteil (6b), das von dem Träger (7) getragen wird und dazu bestimmt ist, auf das erste Diebstahlsicherungsteil (6a) heruntergeklappt zu werden, sodass es auf dieses aufgesetzt ist und die Tretkurbel blockiert;
c. einen Verriegelungsmechanismus, der ebenfalls von dem Träger (7) getragen wird, der zum Verriegeln des zweiten Diebstahlsicherungsteils (6b) an dem ersten Diebstahlsicherungsteil (6a) vorgesehen ist;
wobei die Diebstahlsicherung (1) **dadurch gekennzeichnet ist, dass** sie einen Einstellmechanismus zum Einstellen der Höhe des ersten Diebstahlsicherungsteils (6a) relativ zum Boden umfasst, wobei der Verriegelungsmechanismus ferner so ausgelegt ist, dass er den Einstellmechanismus blockiert, wenn das zweite Diebstahlsicherungsteil (6b) am ersten Diebstahlsicherungsteil (6a) verriegelt ist, und somit dessen Höhe fixiert.

2. Diebstahlsicherungsvorrichtung (1) nach dem vorstehenden Anspruch, wobei der Träger (7) eine Diebstahlsicherungsachse (6d) trägt, wobei das zweite Diebstahlsicherungsteil (6b) so mit der Diebstahlsicherungsachse (6d) verbunden ist, dass es schwenkbar auf das erste Diebstahlsicherungsteil (6a) heruntergeklappt wird.

3. Diebstahlsicherungsvorrichtung (1) nach einem der vorstehenden Ansprüche, wobei der Einstellmechanismus eine Zahnstange (12) umfasst und der Verriegelungsmechanismus eine Sperrklinke (23) umfasst, die konfiguriert ist, um in die Zahnstange (12) einzugreifen.

4. Diebstahlsicherungsvorrichtung (1) nach einem der vorstehenden Ansprüche, wobei der Träger (7) ein rohrförmiger Pfosten ist, der sich in einer im Wesentlichen vertikalen Längsrichtung erstreckt.

5. Diebstahlsicherungsvorrichtung (1) nach dem vorstehenden Anspruch, wobei der Einstellmechanismus einen rohrförmigen Fuß (6) umfasst, der dazu bestimmt ist, auf dem Boden aufzuliegen, wobei der rohrförmige Fuß (6) konfiguriert ist, um in den rohrförmigen Pfosten (7) einzugreifen und dessen Gleiten zu ermöglichen.

6. Diebstahlsicherungsvorrichtung (1) nach dem vorstehenden Anspruch, wobei der Einstellmechanismus einen einen Kolbenkopf (9b) umfassend Kolben (9) umfasst, wobei der Kolben in dem rohrförmigen Fuß (6) angeordnet ist und der Kolbenkopf den rohrförmigen Pfosten (7) stützt.

7. Diebstahlsicherungsvorrichtung (1) nach dem vorstehenden Anspruch, wobei der Kolben (9) einen Kolbenkörper (9a), eine in dem Kolbenkörper (9a) angeordnete Druckfeder (9c) und eine Stange (9d) zum Halten der Druckfeder (9c) in dem Kolbenkörper (9a) umfasst.

8. Diebstahlsicherungsvorrichtung (1) nach einem der Ansprüche 6 bis 7, wobei der Verriegelungsmechanismus eine Rolle (10) umfasst, die fest mit der Diebstahlsicherungsachse (6d) verbunden ist und mit dem Kolben (9) in Kontakt steht.

9. Diebstahlsicherungsvorrichtung (1) nach dem vorstehenden Anspruch, wobei die Rolle (10) des Verriegelungsmechanismus die Form eines Nockens aufweist.

10. Diebstahlsicherungsvorrichtung (1) nach einem der beiden vorstehenden Ansprüche, wobei der Verriegelungsmechanismus ein Schloss umfasst, wobei das Schloss einen Schlossriegel (11) zum Eingreifen in eine Blockieröffnung (10a) der Rolle (10) aufweist.

11. Diebstahlsicherungsvorrichtung (1) nach dem vorstehenden Anspruch, wobei das Schloss elektrisch versorgt wird, um den Schlossriegel (11) selektiv mit der Blockieröffnung (10a) der Rolle (10) in und außer Eingriff zu bringen.

12. Diebstahlsicherungsvorrichtung (1) nach einem der Ansprüche 10 bis 11, umfassend eine erneuerbare Energiequelle, die dem Schloss zugeordnet ist.

13. Diebstahlsicherungsvorrichtung (1) nach dem vorstehenden Anspruch, wobei die erneuerbare Energiequelle ein mechanischer Energierückgewinner ist.

14. Diebstahlsicherungsvorrichtung (1) nach dem vorstehenden Anspruch, wobei der mechanische Energierückgewinner umfasst:
a. eine Kappe (13), die auf der Oberseite des Trägers (7) angeordnet ist, wobei die Kappe (13) dazu ausgelegt ist, sich durch Aufbringen einer äußeren Kraft ausgehend von einer Ausgangsposition in Längsrichtung translatorisch auf dem Träger zu bewegen;
b. einen Rückstellmechanismus (15), um die Kappe (13) während einer Rückbewegung in ihre Ausgangsposition zurückzubewegen, wenn die Ausübung der äußeren Kraft unterbrochen wird;
c. ein Antriebsmechanismus, der mit der Kappe (13) und einem Generator (17) verbunden ist, um die der Bewegung der Kappe in elektrische Energie umzuwandeln.

15. Diebstahlsicherungsvorrichtung (1) nach dem vorstehenden Anspruch, wobei der Antriebsmechanismus einen Freilauf aufweist, sodass der Generator (17) nur während der Rückbewegung der Kappe (13) angetrieben wird.

16. Diebstahlsicherungsvorrichtung (1) nach einem der Ansprüche 11 bis 15, wobei der Verriegelungsmechanismus eine Steuereinheit (18) zum Betätigen des Schlosses umfasst, wobei die Steuereinheit (18) eine Nahfeldkommunikationsschaltung umfasst.

## Claims

1. Anti-theft device (1) for a pedaled vehicle, the device comprising:
a. a first anti-theft part (6a) rigidly connected to a support (7) and having a housing (6c) intended to receive a pedal crank;
b. a second anti-theft part (6b), borne by the support (7), intended to be lowered onto the first anti-theft part (6a) to cover it and immobilize the pedal crank;
c. a locking mechanism, also borne by the support (7), for locking the second anti-theft part (6b) to the first anti-theft part (6a);
the anti-theft device (1) being **characterized in that** it comprises an adjustment mechanism for adjusting an elevation of the first anti-theft part (6a) relative to the ground, the locking mechanism being further configured to immobilize the adjustment mechanism when the second anti-theft part (6b) is locked to the first anti-theft part (6a) and thereby fix it in place in terms of its elevation.

2. Anti-theft device (1) according to the preceding claim, wherein the support (7) bears an anti-theft pin (6d), the second anti-theft part (6b) being connected to the anti-theft pin (6d) so as to be lowered onto the first anti-theft part (6a) by pivoting.

3. Anti-theft device (1) according to either of the preceding claims, wherein the adjustment mechanism comprises a rack (12) and the locking mechanism comprises a pawl (23) configured to engage in the rack (12).

4. Anti-theft device (1) according to any of the preceding claims, wherein the support (7) is a tubular post extending in a substantially vertical longitudinal direction.

5. Anti-theft device (1) according to the preceding claim, wherein the adjustment mechanism comprises a tubular foot (6) intended to rest on the ground, the tubular foot (6) being configured to engage in the tubular post (7) and allow said post to slide.

6. Anti-theft device (1) according to the preceding claim, wherein the adjustment mechanism comprises a piston (9) comprising a piston head (9b), the piston being arranged in the tubular foot (6) and the piston head supporting the tubular post (7).

7. Anti-theft device (1) according to the preceding claim, wherein the piston (9) comprises a piston body (9a), a compression spring (9c) arranged in the piston body (9a), and a rod (9d) for retaining the compression spring (9c) in the piston body (9a).

8. Anti-theft device (1) according to either of claims 6 to 7, wherein the locking mechanism comprises a roller (10) rigidly connected to the anti-theft pin (6d) and in contact with the piston (9).

9. Anti-theft device (1) according to the preceding claim, wherein the roller (10) of the locking mechanism takes the form of a cam.

10. Anti-theft device (1) according to either of the two preceding claims, wherein the locking mechanism comprises a lock, the lock having a lock bolt (11) intended to engage in an immobilizing orifice (10a) in the roller (10).

11. Anti-theft device (1) according to the preceding claim, wherein the lock is electrically powered to selectively engage and disengage the lock bolt (11) from the immobilizing orifice (10a) in the roller (10).

12. Anti-theft device (1) according to either of claims 10 to 11, comprising a renewable energy source joined to the lock.

13. Anti-theft device (1) according to the preceding claim, wherein the renewable energy source is a mechanical energy recuperator.

14. Anti-theft device (1) according to the preceding claim, wherein the mechanical energy recuperator comprises:
a. a cover (13) arranged on the top of the support (7), the cover (13) being able to be moved in longitudinal translation from an original position on the support by applying an external force;
b. a return mechanism (15) for returning, during a return movement, the cover (13) to its original position when the application of the external force is interrupted;
c. a drive mechanism connected to the cover (13) and to a generator (17), to convert the movement of the cover into electrical energy.

15. Anti-theft device (1) according to the preceding claim, wherein the drive mechanism is a freewheeling drive mechanism, such that the generator (17) is driven only during the return movement of the cover (13).

16. Anti-theft device (1) according to any of claims 11 to 15, wherein the locking mechanism comprises a control unit (18) for operating the lock, the control unit (18) comprising a near-field communication circuit.
